(19) **Europäisches Patentamt / European Patent Office / Office européen des brevets**

(11) **EP 4 738 680 A1**

(12) **EUROPEAN PATENT APPLICATION**
published in accordance with Art. 153(4) EPC

(43) Date of publication:
06.05.2026 Bulletin 2026/19

(21) Application number: 23943743.7

(22) Date of filing: 30.06.2023

(51) International Patent Classification (IPC):
$H02M\ 7/48^{(2007.01)}$     $H02J\ 3/18^{(2026.01)}$

(52) Cooperative Patent Classification (CPC):
H02J 3/18; H02J 3/0014; H02J 3/16; H02J 3/32;
H02J 3/381; H02M 1/0025; H02M 7/44; H02M 7/48;
H02M 7/53871; Y02E 40/30

(86) International application number:
PCT/JP2023/024459

(87) International publication number:
WO 2025/004355 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: TMEIC Corporation
Tokyo 104-0031 (JP)

(72) Inventors:
• BANI SHAMSEH, Mohammad
Tokyo 104-0031 (JP)
• LI, Haiqing
Tokyo 104-0031 (JP)

(74) Representative: Winter, Brandl - Partnerschaft
mbB
Alois-Steinecker-Straße 22
85354 Freising (DE)

(54) **VOLTAGE CONTROL APPARATUS AND VOLTAGE CONTROL METHOD**

(57) A voltage control apparatus includes an inverter that converts DC power output from a battery into AC power and supplies the AC power to a power grid and a controller connected to the inverter. The controller executes processing for, when a voltage drop of an output voltage of the inverter is equal to or larger than a threshold because of fluctuation in an AC voltage of the power grid, calculating virtual impedance using variables including an active voltage command value and a reactive voltage command value calculated by a voltage command value and an active current command value and a reactive current command value calculated by the output voltage of the inverter and the voltage command value, processing for calculating a virtual active voltage and a virtual reactive voltage by multiplying, by the virtual impedance, each of an active current and a reactive current calculated by an output current of the inverter, and processing for performing voltage control based on the virtual active voltage and the virtual reactive voltage such that each of the active current and the reactive current can approach each of the active current command value and the reactive current command value required of the power grid.

*FIG. 2*

EP 4 738 680 A1

**Description**

Technical Field

The present disclosure relates to a technique for controlling an output voltage of an inverter.

Background Art

Patent Literature 1 discloses a technique that can stably continue operation in a power converter (that is, an inverter) that executes control simulating a synchronous generator. In this related art, when an AC voltage of a power grid fluctuates, voltage control is performed such that active power input and output between the power grid and the power converter decreases.

Citation List

Patent Literature

[PTL 1] JP 7183486 B

Summary of the Invention

Problems to be Solved by the Invention

A case is assumed in which a voltage control-type GFM (Grid Forming) inverter is used as an inverter that supplies an AC voltage to a power grid. In this case, as explained in Patent Literature 1, when the AC voltage of the power grid fluctuates, voltage control is performed to reduce a difference in active power input and output between the power grid and the power converter.

However, even if the voltage control for stabilizing the active power is performed, it is likely that an output current of the inverter cannot reach a reference current required of the power grid and the power grid becomes unstable. Therefore, in order to supply stable active power to the power grid, it is necessary to perform the voltage control to output an active current and a reactive current required of the power grid.

One object of the present disclosure is to provide a technique that, when an AC voltage of a power grid fluctuates, can perform voltage control to output an active current and a reactive current required of the power grid.

Means for Solving the Problems

A first aspect of the present disclosure relates to a voltage control apparatus. The voltage control apparatus includes an inverter that converts DC power output from a battery into AC power and supplies the AC power to a power grid. The voltage control apparatus further includes a controller connected to the inverter. The controller executes: processing for, when a voltage drop of an output voltage of the inverter is equal to or larger than a threshold because of fluctuation in an AC voltage of the power grid, calculating virtual impedance using variables including an active voltage command value and a reactive voltage command value calculated by a voltage command value and an active current command value and a reactive current command value calculated by the output voltage of the inverter and the voltage command value; processing for calculating a virtual active voltage and a virtual reactive voltage by multiplying, by the virtual impedance, each of an active current and a reactive current calculated by an output current of the inverter; and processing for performing voltage control based on the virtual active voltage and the virtual reactive voltage such that each of the active current and the reactive current can approach each of the active current command value and the reactive current command value required of the power grid.

A second aspect of the present disclosure further includes the following characteristics in addition to the first aspect. The variables further include an active voltage and a reactive voltage calculated by the output voltage. In the processing for calculating the virtual impedance, the controller calculates the virtual impedance based on a condition that the reactive voltage is zero, the reactive voltage command value is zero, a voltage value obtained by subtracting the virtual active voltage and the active voltage from the active voltage command value is zero, and a voltage value obtained by subtracting the virtual reactive voltage and the reactive voltage from the reactive voltage command value is zero.

A third aspect of the present disclosure further includes the following characteristics in addition to the first aspect. The virtual impedance includes resistance and reactance. In the processing for calculating the virtual impedance, the controller calculates each of the resistance and the reactance corresponding to the output voltage.

A fourth aspect of the present disclosure further includes the following characteristics in addition to the first aspect. The active current command value is calculated by multiplying, by a constant value, a differential voltage obtained by calculating a difference between the voltage command value and the output voltage. The reactive current command value is calculated such that a sum obtained by adding up a square value of the active current command value and a square value of the reactive current command value is 1.

A fifth aspect of the present disclosure further includes the following characteristics in addition to the fourth aspect. The active current command value is represented by a percentage. When a calculation result of the active current command value exceeds 100%, the controller sets the active current command value to 100%.

An sixth aspect of the present disclosure relates to a voltage control method. The voltage control method includes: converting, using an inverter, DC power output from a battery into AC power and supplying the AC power to a power grid; when a voltage drop of an output voltage of the inverter is equal to or larger than a threshold because of fluctuation in an AC voltage of the power grid, calculating virtual impedance using variables including an active voltage command value and a reactive voltage command value calculated by a voltage command value and an active current command value and a reactive current command value calculated by the output voltage of the inverter and the voltage command value; calculating a virtual active voltage and a virtual reactive voltage by multiplying, by the virtual impedance, each of an active current and a reactive current calculated by an output current of the inverter; and performing voltage control based on the virtual active voltage and the virtual reactive voltage such that each of the active current and the reactive current can approach each of the active current command value and the reactive current command value required of the power grid.

Advantageous Effects of the Invention

According to the present disclosure, when a voltage drop of an output voltage of an inverter is equal to or larger than a threshold because of fluctuation in an AC voltage of a power grid, virtual impedance is calculated based on a voltage command value and the output voltage of the inverter. A virtual active voltage and a virtual reactive voltage are generated based on virtual impedance. Voltage control is performed based on the virtual active voltage and the virtual reactive voltage such that each of an active current and a reactive current output from the inverter can approach each of an active current command value and a reactive current command value required of the power grid. Consequently, even if the AC voltage of the power grid fluctuates, it is possible to output the active current and the reactive current required of the power grid. Therefore, it is possible to stabilize the power grid.

Brief Description of the Drawings

[Fig. 1]

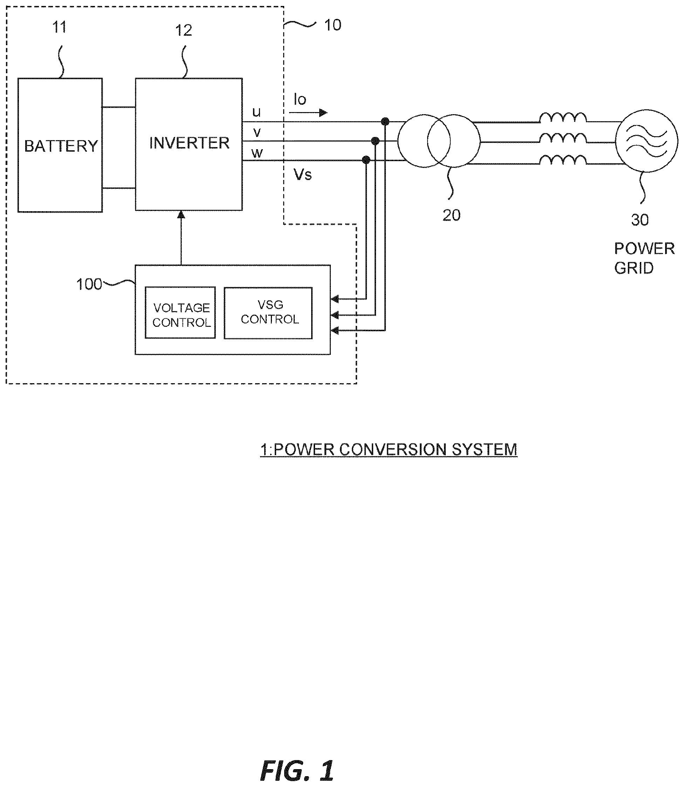

Fig. 1 is a diagram for explaining an overview of a power conversion system.
[Fig. 2]

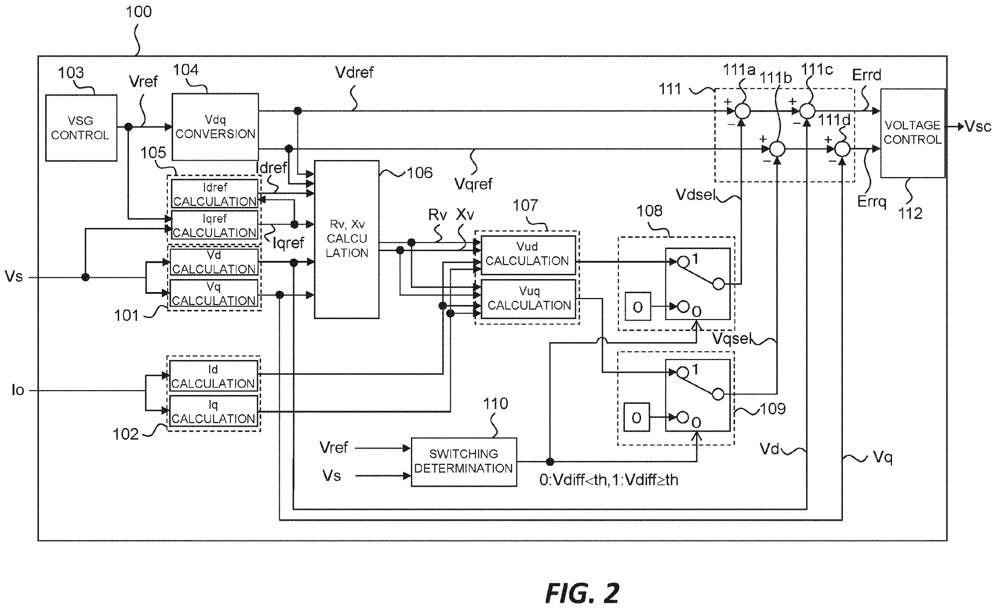

Fig. 2 is a block diagram illustrating a function example of a controller in a voltage control apparatus according to an embodiment.
[Fig. 3]

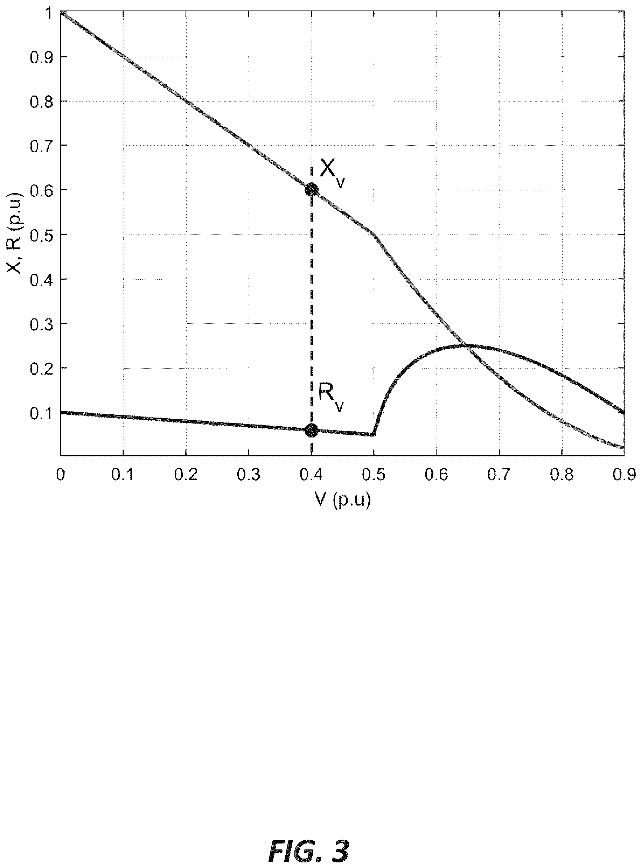

Fig. 3 is an explanatory diagram illustrating a specific example of virtual impedance of the voltage control apparatus according to the embodiment.
[Fig. 4]

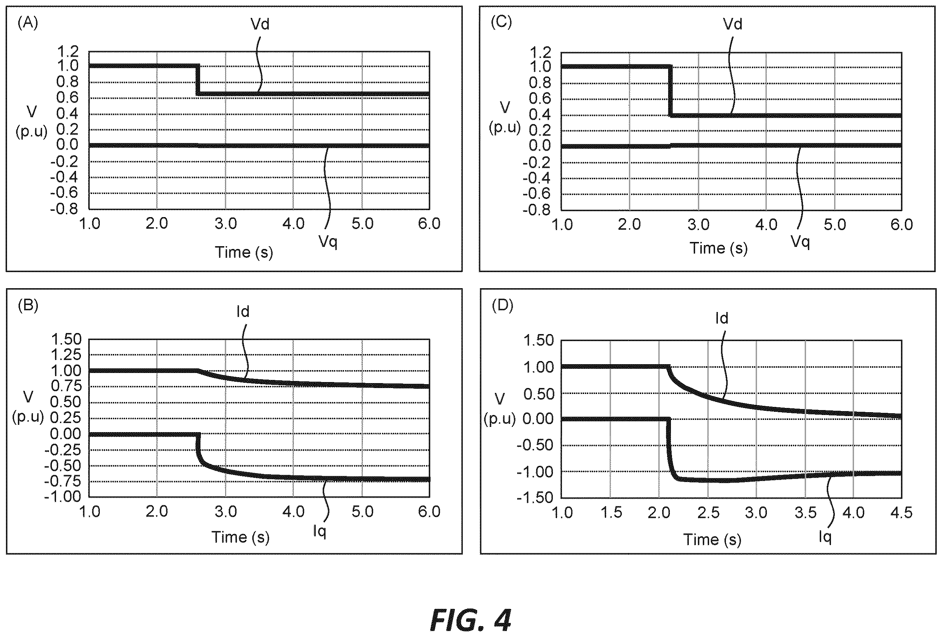

Fig. 4 is a diagram for explaining an output result example of an inverter in the voltage control apparatus according to the embodiment.
[Fig. 5]

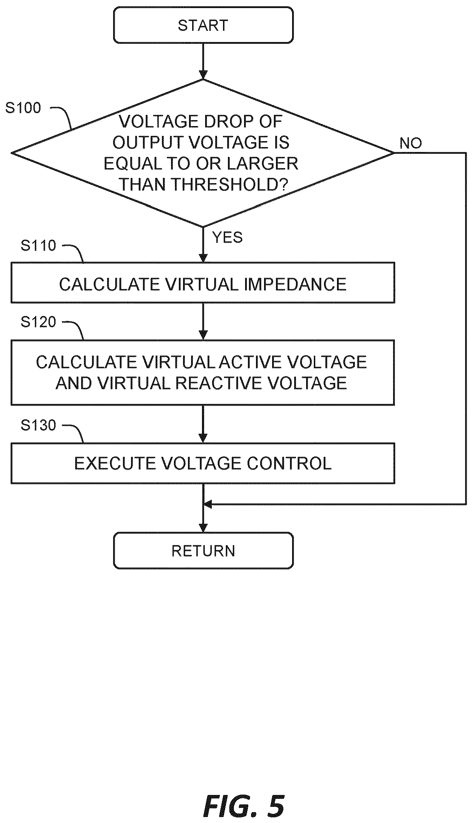

Fig. 5 is a flowchart illustrating a processing example of the controller in the voltage control apparatus according to the embodiment.

Description of Embodiment

A voltage control apparatus and a voltage control method according to an embodiment of the present disclosure are explained with reference to the accompanying drawings. The same reference numerals and signs are added to common elements in the figures and redundant explanation of the elements is omitted.

1. OVERVIEW OF A POWER CONVERSION SYSTEM

Fig. 1 is a diagram for explaining an overview of a power conversion system 1. The power conversion system 1 includes a voltage control apparatus 10, a transformer 20, and a power grid 30. The voltage control apparatus 10 includes a battery 11, an inverter 12, and a controller 100.

The inverter 12 is a device that converts DC power output from the battery 11 into AC power and supplies the AC power to the power grid 30 via the transformer 20. As the inverter 12, a voltage control-type GFM inverter is exemplified.

The controller 100 is a device that is connected to the inverter 12 and controls output power output from the inverter 12. Specifically, a detection value of an output voltage Vs (hereinafter referred to as Vs detection value) and a detection value of an output current Io (hereinafter referred to as Io detection value) output from the inverter 12 are input to the controller 100. The Vs detection value and the Io detection value are detected by a detector (not illustrated) provided between the voltage control apparatus 10 and the power grid 30. Note that, in an example illustrated in Fig. 1, the Vs detection value and the Io detection value detected between the voltage control apparatus 10 and the transformer 20 are input to the controller 100. However, the Vs detection value and the Io detection value detected between the transformer 20 and the power grid 30 may be input to the controller 100. In this way, a detection value of an AC voltage of the power grid 30 may be the Vs detection value. A detection value of an AC current of the power grid 30 may be the Io detection value.

Note that the output voltage Vs output from the inverter 12 consists of three phase voltages (Vsu, Vsv, and Vsw). The output current Io output from the inverter 12 consists of three phase currents (Iou, Iov, and Iow). That is, the Vs detection value explained above includes a Vsu detection value, a Vsv detection value, and a Vsw detection value. The Io detection value explained above includes an Iou detection value, an Iov detection value, and an Iow detection value.

The controller 100 executes VSG (Virtual Synchronous Generator) control based on the Vs detection value and the Io detection value input to the controller 100. VSG means a virtual synchronous generator that simulatively imparts dynamic characteristics of a synchronous generator to the inverter 12. That is, the VSG control means controlling the virtual synchronous generator. The dynamic characteristics of the synchronous generator include an inertia constant M and a braking constant D. Consequently, it is possible to prevent the power grid 30 from becoming unstable when a system accident occurs, that is, LVRT (Low Voltage Ride Through) occurs.

Further, when the LVRT occurs, the controller 100 performs, based on an execution result of the VSG control, voltage control for the inverter 12 such that the output current Io output from the inverter 12 has a current value required of the power grid 30. The voltage control includes generation of the three phase voltages (Vsu, Vsv, and Vsw) and PWM control for performing pulse width modulation on each of the three phase voltages. The controller 100 outputs a voltage control signal generated by the PWM control to the inverter 12. Consequently, the inverter 12 can reduce, based on the voltage control signal, a difference in AC power between the power grid 30 and the inverter 12.

## 2. SPECIFIC EXAMPLE OF THE VOLTAGE CONTROL APPARATUS

### 2-1. CONFIGURATION EXAMPLE OF THE CONTROLLER

The controller 100 includes hardware for implementing various functions. The hardware may be a processing circuit or may be a computer that executes, with a CPU, a program stored in a storage device. As the processing circuit, an FPGA (Field Programmable Gate Array), an ASIC (Application Specific Integrated Circuit), and the like are exemplified.

### 2-2. FUNCTION EXAMPLE OF THE CONTROLLER

Fig. 2 is a block diagram illustrating a function example of the controller 100 in the voltage control apparatus 10 according to the embodiment. The controller 100 includes an active and reactive voltages calculation processing unit 101, an active and reactive currents calculation processing unit 102, a VSG control unit 103, a dq-axis voltage conversion unit 104, a dq-axis current command calculation unit 105, a virtual impedance generation unit 106, a virtual voltage generation unit 107, a first output selection circuit 108, a second output selection circuit 109, a switching determination circuit 110, an addition and subtraction circuit 111, and a voltage control circuit 112.

The active and reactive voltages calculation processing unit 101 calculates an active voltage Vd and a reactive voltage Vq based on the Vs detection value input to the controller 100. The active voltage Vd and the reactive voltage Vq calculated by the active and reactive voltages calculation processing unit 101 are represented, as an example, by the following Expression (1).
[Math. 1]

$$\begin{bmatrix} Vd \\ Vq \end{bmatrix} = \begin{bmatrix} \sin\theta & \sin(\theta - 120°) & \sin(\theta + 120°) \\ \cos\theta & \cos(\theta - 120°) & \cos(\theta + 120°) \end{bmatrix} \begin{bmatrix} Vsu \\ Vsv \\ Vsw \end{bmatrix} \cdots (1)$$

The active and reactive currents calculation processing unit 102 calculates an active current Id and a reactive current Iq based on the Io detection value input to the controller 100. The active current Id and the reactive current Iq calculated by the active and reactive currents calculation processing unit 102 are represented, as an example, by the following Expression (2).

[Math. 2]

$$\begin{bmatrix} Id \\ Iq \end{bmatrix} = \begin{bmatrix} \sin\theta & \sin(\theta - 120°) & \sin(\theta + 120°) \\ \cos\theta & \cos(\theta - 120°) & \cos(\theta + 120°) \end{bmatrix} \begin{bmatrix} Iou \\ Iov \\ Iow \end{bmatrix} \cdots (2)$$

The VSG control unit 103 generates a voltage command value Vref of the output voltage Vs of the inverter 12. The voltage command value Vref is, for example, a fixed value determined according to the power grid 30 connected to the inverter 12. The voltage command value Vref includes a d-axis voltage command value Vdref and a q-axis voltage command value Vqref.

The d-axis voltage command value Vdref is referred to as active voltage command value Vdref as well. The q-axis voltage command value Vqref is referred to as reactive voltage command value Vqref as well. The dq-axis voltage conversion unit 104 converts the voltage command value Vref generated by the VSG control unit 103 into the active voltage command value Vdref and the reactive voltage command value Vqref.

When LVRT has occurred according to fluctuation in the AC voltage of the power grid 30, the dq-axis current command calculation unit 105 calculates, based on the voltage command value Vref and the Vs detection value, a d-axis current command value Idref and a q-axis current command value Iqref required of the power grid 30. The d-axis current command value Idref is referred to as active current command value Idref as well. The d-axis current command value Idref is referred to as reactive current command value Iqref as well. Each of the active current command value Idref and the reactive current command value Iqref calculated by the dq-axis current command calculation unit 105 is represented by the following Expression (3) and Expression (4). In Expression (3), k is a constant value determined by the specifications of the inverter 12. ΔV is a differential voltage Vdiff obtained by calculating a difference between the voltage command value Vref and the Vs detection value.

[Math. 3]

$$Iqref = k\Delta V \cdots (3)$$

[Math. 4]

$$Idref = \sqrt{1 - Iqref^2} \cdots (4)$$

Here, when variables used in Expression (3) and Expression (4) are represented by percentages, the active current command value Idref is calculated not to exceed 100%. Specifically, when a voltage drop of the Vs detection value decreases to 60%, AV is Vdref-Vs=100%-60%=40%. When k is set to a constant value "2", Iqref is 2×40%=80%. In this case, since Iqref does not exceed 100%, Iqref is 80%. Note that the reactive current command value Iqref is calculated such that a sum obtained by adding up a square value of the active current command value Idref and a square value of the reactive current command value Iqref is 1. Therefore, when the active current command value Idref is 80%, the reactive current command value Iqref is 60% according to Expression (4).

Subsequently, a case is assumed in which the voltage drop of the Vs detection value decreases to 10%. In this case, ΔV is Vdref-Vs=100%-10%=90%. When k is set to the constant value "2", Iqref is 2×90%=180%. In this case, since Iqref exceeds 100%, Iqref is an upper limit value of 100%. Note that, when the active current command value Idref is 100%, the reactive current command value Iqref is 0% according to Expression (4).

When the voltage drop of the Vs detection value is equal to or larger than a threshold, that is, the differential voltage Vdiff obtained by calculating a difference between the Vs detection value and the voltage command value Vref is equal to or larger than a threshold, the virtual impedance generation unit 106 calculates virtual impedance to raise the output voltage Vs of the inverter 12. The virtual impedance includes resistance Rv and reactance Xv. Each of the resistance Rv and the reactance Xv is calculated based on the active voltage command value Vdref, the reactive voltage command value Vqref, the active current command value Idref, the reactive current command value Iqref, the active voltage Vd, and the reactive voltage Vq. Details of the calculation of the virtual impedance (the resistance Rv and the reactance Xv) are explained below.

The virtual voltage generation unit 107 generates, based on the virtual impedance (the resistance Rv and the reactance Xv), the active current Id, and the reactive current Iq, a virtual active voltage Vud and a virtual reactive voltage Vuq for raising the output voltage Vs of the inverter 12. Each of the virtual active voltage Vud and the virtual voltage generation unit 107 calculated by the virtual voltage generation unit 107 is represented, as an example, by the following Expression (5).
[Math. 5]

$$\begin{bmatrix} Vud \\ Vuq \end{bmatrix} = \begin{bmatrix} Id & -Iq \\ Iq & Id \end{bmatrix} \begin{bmatrix} Rv \\ Xv \end{bmatrix} \cdots (5)$$

The first output selection circuit 108 is a change-over switch including two input terminals and one output terminal. The first output selection circuit 108 switches the two input terminals to select one input terminal of the two input terminals. Specifically, when a switching determination result input to the first output selection circuit 108 is "0", the first output selection circuit 108 switches the two input terminals to select a first input terminal. On the other hand, when the switching determination result input to the first output selection circuit 108 is "1", the first output selection circuit 108 switches the two input terminals to select a second input terminal. In the example illustrated in Fig. 2, a fixed value (a value of zero) is input to the first input terminal of the first output selection circuit 108 and the virtual active voltage Vud is input to the second input terminal of the first output selection circuit 108.

The switching determination result is generated by the switching determination circuit 110. The switching determination circuit 110 outputs "0" as the switching determination result when the differential voltage Vdiff between the Vs detection value and the voltage command value Vref is smaller than the threshold, that is, the AC voltage of the power grid 30 is not in a state of LVRT. On the other hand, the switching determination circuit 110 outputs "1" as the switching determination result when the differential voltage Vdiff between the Vs detection value and the voltage command value Vref is equal to or larger than the threshold, that is, when the AC voltage of the power grid 30 is in the state of LVRT. The first output selection circuit 108 outputs a voltage input to the selected input terminal. The voltage output from the first output selection circuit 108 is referred to as selected active voltage Vdsel.

The second output selection circuit 109 is a change-over switch including two input terminals and one output terminal. The second output selection circuit 109 switches the two input terminals to select one input terminal of the two input terminals. Specifically, when a switching determination result input to the second output selection circuit 109 is "0", the second output selection circuit 109 switches the two input terminals to select a first input terminal. On the other hand, when the switching determination result input to the second output selection circuit 109 is "1", the second output selection circuit 109 switches the two input terminals to select a second input terminal. In the example illustrated in Fig. 2, a fixed value (a value of zero) is input to the first input terminal of the second output selection circuit 109 and the virtual reactive voltage Vuq is input to the second input terminal of the second output selection circuit 109.

As explained above, the switching determination result is generated by the switching determination circuit 110. The second output selection circuit 109 outputs a voltage input to the selected input terminal. The voltage output from the second output selection circuit 109 is referred to as selected reactive voltage Vqsel.

The addition and subtraction circuit 111 includes four addition and subtraction circuits (a first addition and subtraction circuit 111a, a second addition and subtraction circuit 111b, a third addition and subtraction circuit 111c, and a fourth addition and subtraction circuit 111d). The first addition and subtraction circuit 111a is an addition and subtraction circuit that adds the active voltage command value Vdref and subtracts the selected active voltage Vdsel. The second addition and subtraction circuit 111b is an addition and subtraction circuit that adds the reactive voltage command value Vqref and subtracts the selected reactive voltage Vqsel. The third addition and subtraction circuit 111c is an addition and subtraction circuit that adds an output of the first addition and subtraction circuit 111a and subtracts the active voltage Vd. The fourth addition and subtraction circuit 111d is an addition and subtraction circuit that adds an output of the second addition and subtraction circuit 111b and subtracts the reactive voltage Vq.

When an active voltage output from the third addition and subtraction circuit 111c is represented as abnormal active voltage Errd and a reactive voltage output from the fourth addition and subtraction circuit 111d is represented as an abnormal reactive voltage Errq, a relational expression of Expression (6) described below holds.
[Math. 6]

$$\begin{bmatrix} Vdref \\ Vqref \end{bmatrix} - \begin{bmatrix} Vud \\ Vuq \end{bmatrix} - \begin{bmatrix} Vd \\ Vq \end{bmatrix} = \begin{bmatrix} Errd \\ Errq \end{bmatrix} \cdots (6)$$

When Expression (5) is substituted in Expression (6), the relational expression is represented by the following Expression (7).
[Math. 7]

$$\begin{bmatrix} Vdref \\ Vqref \end{bmatrix} - \begin{bmatrix} Id & -Iq \\ Iq & Id \end{bmatrix} \begin{bmatrix} Rv \\ Xv \end{bmatrix} - \begin{bmatrix} Vd \\ Vq \end{bmatrix} = \begin{bmatrix} Errd \\ Errq \end{bmatrix} \cdots (7)$$

In this case, if both of the abnormal active voltage Errd and the abnormal reactive voltage Errq are the value of zero, this means that both of the virtual active voltage Vud and the virtual reactive voltage Vuq are appropriate voltage values. That is, by setting both of the abnormal active voltage Errd and the abnormal reactive voltage Errq to zero in advance, it is possible to calculate optimum values of the virtual active voltage Vud and the virtual reactive voltage Vuq.

Further, it is desirable that a power factor obtained by representing the active voltage Vd with respect to the output voltage Vs of the inverter 12 as a percentage is high. For this reason, both of the reactive voltage Vq and the reactive voltage command value Vqref are set to zero. Therefore, in Expression (7), when Errd=0, Errq=0, the reactive voltage Vq=0, and the reactive voltage command value Vqref=0, each of the resistance Rv and the reactance Xv of the virtual impedance is represented, as an example, by the following Expression (8).

[Math. 8]

$$\begin{bmatrix} Rv \\ Xv \end{bmatrix} = \frac{1}{Idref^2 + Iqref^2} \begin{bmatrix} Vdref - Vd & 0 \\ 0 & Vd - Vdref \end{bmatrix} \begin{bmatrix} Idref \\ Iqref \end{bmatrix} \cdots (8)$$

Consequently, since a calculation formula for the virtual impedance includes the active current command value Idref and the reactive current command value Iqref, the voltage control apparatus 10 can output an appropriate active current Id and an appropriate reactive current Iq to the power grid 30.

The voltage control circuit 112 is a circuit that performs voltage control based on the virtual active voltage Vud and the virtual reactive voltage Vuq calculated based on the virtual impedance such that each of the active current Id and the reactive current Iq can approach each of the active current command value Idref and the reactive current command value Iqref required of the power grid 30. The voltage control circuit 112 outputs a voltage control signal Vsc generated by the voltage control.

Note that, as explained above, the voltage control includes the processing for generating the three phase voltages (Vsu, Vsv, and Vsw) and the PWM control for performing the pulse width modulation on each of the three phase voltages. In the PWM control, the generated three phase voltages are controlled to have a predetermined pulse width and a predetermined frequency. For example, PI control is used for the generation of the three phase voltages by the voltage control.

2-3. CALCULATION RESULT EXAMPLE OF THE VIRTUAL IMPEDANCE

Fig. 3 is an explanatory diagram illustrating a specific example of the virtual impedance of the voltage control apparatus 10 according to the embodiment. Specifically, Fig. 3 illustrates waveforms of the resistance Rv and the reactance Xv in the virtual impedance with respect to the Vs detection value. The horizontal axis of a graph illustrated in Fig. 3 indicates the Vs detection value and the vertical axis indicates values of the resistance Rv and the reactance Xv. Note that, in the example illustrated in Fig. 3, values of the variables are represented by PU (Per Unit) but may be represented by a percentage.

In the example illustrated in Fig. 3, the waveforms of the resistance Rv and the reactance Xv are waveforms obtained when the active voltage command value Vdref is set to "1" and a constant k is set to "2" in Expression (7) described above. For example, the resistance Rv and the reactance Xv in the case in which the Vs detection value decreases to 0.4 (40%) are conceived. In this case, the active current command value Idref required of the power grid 30 is calculated as 0% based on Expression (3) described above and the reactive current command value Iqref required of the power grid 30 is calculated as 100% based on Expression (4) described above. To realize this, as illustrated in Fig. 3, the resistance Rv is 0.06 and the reactance Xv is 0.6.

2-4. OUTPUT RESULT EXAMPLE OF THE INVERTER

Fig. 4 is a diagram for explaining an output result example of the inverter 12 in the voltage control apparatus 10 according to the embodiment. Fig. 4(A) illustrates an example of a waveform of the active voltage Vd and a waveform of the reactive voltage Vq in the case in which the Vs detection value decreases to 65%. Fig. 4(B) illustrates an example of a waveform of the active current Id and a waveform of the reactive current Iq output, when the Vs detection value decreases to 65%, from the inverter 12 to the power grid 30 based on the voltage control signal Vsc generated by the voltage control circuit 112. In the example illustrated in Fig. 4(B), when the Vs detection value decreases to 65%, the active current Id is output at approximately 70% and the reactive current Iq is output at approximately -70%.

Fig. 4(C) illustrates an example of a waveform of the active voltage Vd and a waveform of the reactive voltage Vq in the case in which the Vs detection value decreases to 40%. Fig. 4(D) illustrates an example of a waveform of the active current Id and a waveform of the reactive current Iq output, when the Vs detection value decreases to 40%, from the inverter 12 to the power grid 30 based on the voltage control signal Vsc generated by the voltage control circuit 112. In the example illustrated in Fig. 4(D), when the Vs detection value decreases to 40%, the active current Id is output at approximately 0% and the reactive current Iq is output at approximately -100%.

As explained above, when the AC voltage of the power grid 30 fluctuates, the active current Id and the reactive current Iq required of the power grid 30 are output based on the virtual impedance to reduce the difference in the AC power between the power grid 30 and the inverter 12.

3. PROCESSING EXAMPLE

Fig. 5 is a flowchart illustrating a processing example of the controller 100 in the voltage control apparatus 10 according to the embodiment.

In step S100, the controller 100 determines whether a voltage drop of an output voltage of the inverter 12 is equal to or larger than a threshold. When the voltage drop of the output voltage is equal to or larger than the threshold (step S100; Yes), the processing proceeds to step S110. Otherwise (step S100; No), the controller 100 ends the processing.

In step S110, the controller 100 calculates virtual impedance based on the voltage command value Vref and the output voltage Vs of the inverter 12. Thereafter, the processing proceeds to step S120.

Note that the virtual impedance is calculated based on a predetermined condition. The predetermined condition means a condition that the reactive voltage Vq is zero, the reactive voltage command value Vqref is zero, a voltage value obtained by subtracting the virtual active voltage Vud and the active voltage Vd from the active voltage command value Vdref is zero, and a voltage value obtained by subtracting the virtual reactive voltage Vuq and the reactive voltage Vq from the reactive voltage command value Vqref is zero.

In step S120, the controller 100 multiplies, by the virtual impedance, each of the active current Id and the reactive current Iq calculated by the output current Io of the inverter 12 and calculates the virtual active voltage Vud and the virtual reactive voltage Vuq. Thereafter, the processing proceeds to step S130.

In step S130, the controller 100 executes, based on the virtual active voltage Vud and the virtual reactive voltage Vuq, voltage control such that each of the active current Id and the reactive current Iq output from the inverter 12 can approach each of the active current command value Idref and the reactive current command value Iqref required of the power grid 30.

4. EFFECTS

With the voltage control apparatus 10 according to the embodiment, when a voltage drop of the output voltage Vs of the inverter 12 is equal to or larger than a threshold because of fluctuation in an AC voltage of the power grid 30, virtual impedance is calculated based on the voltage command value Vref and the output voltage Vs of the inverter 12. In the voltage control apparatus 10, the virtual active voltage Vud and the virtual reactive voltage Vuq are generated based on virtual impedance. Further, in the voltage control apparatus 10, voltage control is performed based on the virtual active voltage Vud and the virtual reactive voltage Vuq such that each of the active current Id and the reactive current Iq output from the inverter 12 can approach each of the active current command value Idref and the reactive current command value Iqref required of the power grid 30. Consequently, even if the AC voltage of the power grid 30 fluctuates, it is possible to output the active current Id and the reactive current Iq required of the power grid 30. Therefore, it is possible to stabilize the power grid 30.

Reference Signs List

1...Power conversion system, 10... Voltage control apparatus, 11... Battery, 12... Inverter, 20...Transformer, 30... Power grid, 100... Controller, 101...Active and reactive voltages calculation processing unit, 102... Active and reactive currents calculation processing unit, 103...VSG control unit, 104...dq-axis voltage conversion unit, 105...dq-axis current command calculation unit, 106...Virtual impedance generation unit, 107...Virtual voltage generation unit, 108...First output selection circuit, 109...Second output selection circuit, 110...Switching determination circuit, 111...Addition and subtraction circuit, 111a...First addition and subtraction circuit, 111b...Second addition and subtraction circuit, 111c...Third addition and subtraction circuit, 111d...Fourth addition and subtraction circuit, 112...Voltage control circuit

## EP 4 738 680 A1

**Claims**

1. A voltage control apparatus comprising:

an inverter that converts DC power output from a battery into AC power and supplies the AC power to a power grid; and
a controller connected to the inverter, wherein
the controller is configured to execute:

processing for, when a voltage drop of an output voltage of the inverter is equal to or larger than a threshold because of fluctuation in an AC voltage of the power grid, calculating virtual impedance using variables including an active voltage command value and a reactive voltage command value calculated by a voltage command value and an active current command value and a reactive current command value calculated by the output voltage and the voltage command value;
processing for calculating a virtual active voltage and a virtual reactive voltage by multiplying, by the virtual impedance, each of an active current and a reactive current calculated by an output current of the inverter; and
processing for performing voltage control based on the virtual active voltage and the virtual reactive voltage such that each of the active current and the reactive current can approach each of the active current command value and the reactive current command value required of the power grid.

2. The voltage control apparatus according to claim 1, wherein

the variables further include an active voltage and a reactive voltage calculated by the output voltage, and
the controller is configured to, in the processing for calculating the virtual impedance,
calculate the virtual impedance based on a condition that the reactive voltage is zero, the reactive voltage command value is zero, a voltage value obtained by subtracting the virtual active voltage and the active voltage from the active voltage command value is zero, and a voltage value obtained by subtracting the virtual reactive voltage and the reactive voltage from the reactive voltage command value is zero.

3. The voltage control apparatus according to claim 1, wherein

the virtual impedance includes resistance and reactance, and
the controller is configured to, in the processing for calculating the virtual impedance, calculate each of the resistance and the reactance corresponding to the output voltage.

4. The voltage control apparatus according to claim 1, wherein

the active current command value is calculated by multiplying, by a constant value, a differential voltage obtained by calculating a difference between the voltage command value and the output voltage, and
the reactive current command value is calculated such that a sum obtained by adding up a square value of the active current command value and a square value of the reactive current command value is 1.

5. The voltage control apparatus according to claim 4, wherein

the active current command value is represented by a percentage, and
when a calculation result of the active current command value exceeds 100%, the controller sets the active current command value to 100%.

6. A voltage control method comprising:

converting, using an inverter, DC power output from a battery into AC power and supplying the AC power to a power grid;
when a voltage drop of an output voltage of the inverter is equal to or larger than a threshold because of fluctuation in an AC voltage of the power grid, calculating virtual impedance using variables including an active voltage command value and a reactive voltage command value calculated by a voltage command value and an active current command value and a reactive current command value calculated by the output voltage and the voltage command value;

9

calculating a virtual active voltage and a virtual reactive voltage by multiplying, by the virtual impedance, each of an active current and a reactive current calculated by an output current of the inverter; and

performing voltage control based on the virtual active voltage and the virtual reactive voltage such that each of the active current and the reactive current can approach each of the active current command value and the reactive current command value required of the power grid.

1:POWER CONVERSION SYSTEM

*FIG. 1*

*FIG. 2*

**FIG. 3**

FIG. 4

START

S100 — VOLTAGE DROP OF OUTPUT VOLTAGE IS EQUAL TO OR LARGER THAN THRESHOLD?

NO

YES

S110 — CALCULATE VIRTUAL IMPEDANCE

S120 — CALCULATE VIRTUAL ACTIVE VOLTAGE AND VIRTUAL REACTIVE VOLTAGE

S130 — EXECUTE VOLTAGE CONTROL

RETURN

**FIG. 5**

## INTERNATIONAL SEARCH REPORT

| International application No. |
| --- |
| **PCT/JP2023/024459** |

| A. | CLASSIFICATION OF SUBJECT MATTER |
| --- | --- |

*H02M 7/48*(2007.01)i; *H02J 3/18*(2006.01)i
FI:   H02M7/48 R; H02J3/18

According to International Patent Classification (IPC) or to both national classification and IPC

| B. | FIELDS SEARCHED |
| --- | --- |

Minimum documentation searched (classification system followed by classification symbols)

H02M7/48; H02J3/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2012-85500 A (MITSUBISHI ELECTRIC CORPORATION) 26 April 2012 (2012-04-26) entire text, all drawings | 1-6 |
| A | JP 7183486 B1 (MITSUBISHI ELECTRIC CORPORATION) 05 December 2022 (2022-12-05) entire text, all drawings | 1-6 |
| A | WO 2021/029313 A1 (TOKYO ELECTRIC POWER COMPANY HOLDINGS, INC.) 18 February 2021 (2021-02-18) entire text, all drawings | 1-6 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 August 2023** | **15 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/024459**

| Patent document cited in search report | | | Publication date (day/month/year) | Patent family member(s) | Publication date (day/month/year) |
|---|---|---|---|---|---|
| JP | 2012-85500 | A | 26 April 2012 | (Family: none) | |
| JP | 7183486 | B1 | 05 December 2022 | (Family: none) | |
| WO | 2021/029313 | A1 | 18 February 2021 | US 2022/0399801 A1 entire text, all drawings | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7183486 B